# FASCICULE DE BREVET EUROPEEN

(11) **EP 1 879 485 B1**
(45) Date de publication et mention de la délivrance du brevet: **10.02.2010**
(21) Numéro de dépôt: 06755420.4
(22) Date de dépôt: 12.04.2006
(51) Int. Cl.: A47J 31/06

(54) **PORTE-FILTRE POUR DOSETTE ET MACHINE A CAFE COMPRENANT UN TEL PORTE-FILTRE**
KAPSELFILTERHALTER UND KAFFEEMASCHINE MIT DEM FILTERHALTER
POD FILTER HOLDER AND A COFFEE MACHINE PROVIDED WITH SAID FILTER HOLDER

(30) Priorité: 04.05.2005 FR 0504581
(43) Date de publication de la demande: 23.01.2008
(73) Titulaire: SEB SA, 69130 Ecully (FR)
(72) Inventeur: HIRON, Frédéric, F-72130 Asse le Boisne (FR)
(74) Mandataire: Kiehl, Hubert
(86) Numéro de dépôt international: PCT/FR2006/000855
(87) Numéro de publication internationale: WO 2006/120312

(56) Documents cités:
- BE-A2- 775 481
- US-A- 3 908 530
- US-A- 4 429 623

## Description

La présente invention se rapporte à un porte-filtre pour machine à café, destiné à recevoir une dosette de produit à infuser. Plus particulièrement, l'invention se rapporte à un porte-filtre comprenant une coupelle présentant un fond muni d'un orifice de sortie, et une paroi annulaire s'étendant depuis le fond jusqu'à un pourtour supérieur définissant une ouverture destinée à être montée sur une sortie d'eau chaude sous pression d'une machine à café, et un support de dosette s'étendant entre la paroi annulaire de la coupelle à distance du fond et comportant des perforations.

Dans les porte-filtre connus, le support perforé est le plus souvent formé par une plaque métallique présentant un grand nombre de trous traversants cylindriques. Les trous peuvent présenter un diamètre de quelques dizaines de microns si le support est destiné à recevoir directement de la mouture, par exemple de café, ce qui crée une perte de charge importante. Lorsque le porte-filtre est destiné à recevoir une dosette, formée par exemple par un sachet souple en papier filtre contenant de la mouture de café non compactée, les trous du support de dosette peuvent présenter un diamètre de l'ordre de 1 à 2 mm. Toutefois, étant donné la pression exercée sur la dosette par l'arrivée d'eau chaude, les trous du support doivent être suffisamment espacés les uns des autres pour que le support présente la résistance mécanique nécessaire. Par conséquent, le rapport entre la surface des trous et la surface totale du support, reste faible. Les pertes de charges du liquide traversant la dosette et le support restent non négligeables. De plus, l'écoulement de l'eau à travers la dosette peut être perturbé dans certaines zones qui sont disposées contre une surface pleine importante du support,

Il existe aussi des porte-filtre plus particulièrement destinés à des dosettes souples, comme par exemple décrit dans les documents EP-A-0 904 717 et US-A-4 429 623, dans lesquels la dosette repose sur une plaque qui présente des rainures radiales sur sa face supérieure, et un orifice central unique, généralement calibré de manière à retenir une partie de l'infusion en amont et à former un jet en aval de celui-ci. Une telle plaque support permet de collecter l'infusion immédiatement en aval de la dosette et de canaliser celle-ci vers l'orifice unique. Toutefois, un tel support crée une perte de charge importante, à la différence d'un support traversé par l'infusion sur la majeure partie de sa surface grâce à des perforations réparties sur celle-ci.

On notera que dans le cas de dosettes souples, le problème de la résistance mécanique du support est plus sensible, car contrairement aux dosettes rigides dans lesquelles la mouture est compactée, il n'y a pas de répartition de la pression exercée en un point de la face supérieure de la dosette sur une zone plus importante de sa face inférieure. Par ailleurs, les pertes de charges créées par le porte-filtre sont plus sensibles lorsque la machine à café produit de l'eau à faible pression, de l'ordre de deux bars, et non pas de l'eau sous haute pression comme dans la plupart des machines de type espresso fonctionnant à 15 bars environ.

La présente invention a pour but de pallier les inconvénients mentionnés ci-dessus, en réalisant un porte-filtre minimisant les pertes de charges tout en présentant une bonne résistance mécanique, et ce notamment pour une machine à café fonctionnant à faible pression avec des dosettes souples.

A cet effet, la présente invention a pour objet un porte-filtre du type précité, caractérisé en ce qu'au moins une perforation est réalisée sous la forme d'une fente allongée s'étendant dans le plan dudit support et présentant une largeur adaptée à permettre un écoulement libre de l'infusion vers ledit orifice de sortie.

En formant ainsi une ou plusieurs fentes à travers le support, à la place de trous cylindriques, on constate qu'on peut augmenter de manière importante la surface totale des perforations du support, sans dégrader la fonction de soutien de la dosette et tout en conservant une résistance mécanique suffisante. Il apparaît que chaque fente présente une largeur suffisamment réduite pour former des lignes de support de la dosette assez rapprochées, notamment pour éviter un déchirement du papier filtre formant la dosette.

De plus, chaque fente limite de manière très importante les zones pleines de la grille qui n'ont pas de fonction de résistance structurelle, mais qui limitent la surface des perforations. Par exemple, si l'on formait une série de trous adjacents alignés, la surface totale de l'ouverture ainsi créée resterait inférieure à la surface d'une fente présentant une largeur égale au diamètre des trous et une longueur égale à la somme des diamètres de ces trous. Ce rapport entre la surface des perforations et la surface totale du support de dosette est d'autant plus intéressant que chaque fente présente un allongement, c'est-à-dire un rapport de la longueur par la largeur, important.

Les fentes peuvent être séparées par des nervures de largeur continue, et non pas avec des zones étroites créées entre deux trous circulaires, qui pourraient créer des points de faiblesse.

Dans des modes de réalisation préférés de l'invention, on a recours en outre à l'une ou l'autre des dispositions suivantes :
- le support de dosette comporte une pluralité de fentes annulaires disjointes agencées de manière concentrique ;
- la surface totale des fentes du support de dosette représente au moins 20% de la surface totale dudit support, et est de préférence égale à environ 30% de la surface dudit support, de manière à minimiser les pertes de charges tout en conservant la résistance mécanique satisfaisante ;
- chaque fente présente une largeur comprise entre 1 et 3 mm ;
- chaque fente présente un allongement supérieur à 10 ;
- la distance séparant deux fentes adjacentes est au plus égale à la largeur desdites fentes adjacentes ;
- le support de dosette présente une zone périphérique qui est dépourvue de fente et dans laquelle sont pratiqués des trous cylindriques traversants espacés ;
- le support de dosette présente une face inférieure sur laquelle sont formés des bras de renfort s'étendant radialement par rapport au centre du support.
- le support de dosette est formé en une seule pièce moulée en résine synthétique, et de préférence en polyamide, ce qui permet de réaliser une pièce de géométrie complexe à un coût acceptable.

La présente invention se rapporte également à une machine à café comportant un générateur d'eau chaude sous faible pression, de l'ordre de deux bars, et une chambre d'infusion, caractérisée en ce que la chambre d'infusion comporte un porte-filtre tel que défini précédemment et géométriquement adapté à recevoir une dosette souple.

D'autres caractéristiques et avantages de l'invention apparaîtront au cours de la description suivante d'un mode de réalisation, donné à titre d'exemple non limitatif, en référence aux dessins annexés dans lesquels :
- la figure 1 est une vue en perspective d'un porte-filtre comprenant un support de dosette réalisé selon l'invention;
- la figure 2 est une vue en coupe verticale selon la ligne II-II de la figure 1 avec une dosette disposée dans le porte-filtre ;
- la figure 3 est une vue agrandie de dessous du support du porte-filtre représenté à la figure 1 ;
- la figure 4 est une vue en coupe verticale selon la ligne IV-IV de la figure 3.

Sur les différentes figures, on a conservé des références identiques pour désigner des éléments identiques ou similaires.

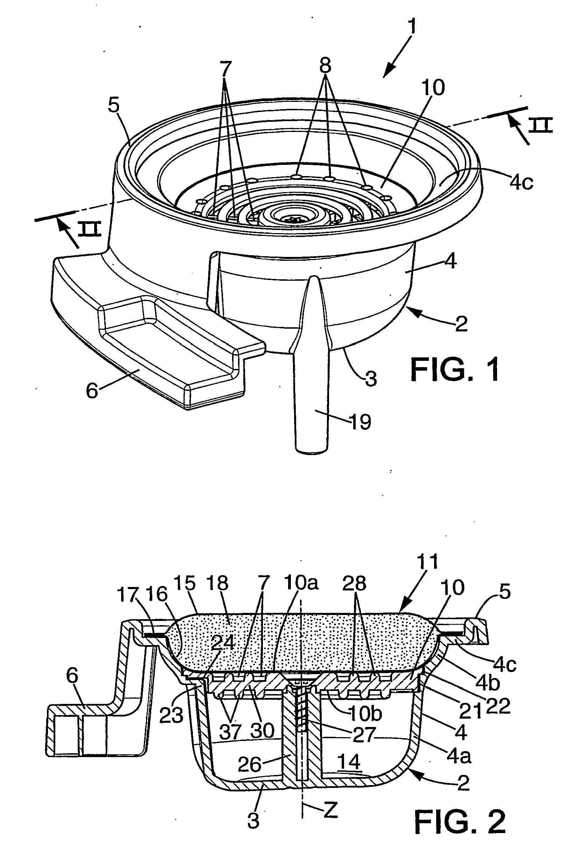

A la figure 1 est représenté un porte-filtre 1 destiné à recevoir une dosette de produit à infuser, tel que du café par exemple. Le porte-filtre 1 comprend une coupelle 2 présentant un fond 3, une paroi annulaire 4 s'étendant globalement verticalement à partir du fond 3 jusqu'à un pourtour supérieur 5, et un organe de préhension 6.

Le porte-filtre 1 comprend en outre un support de dosette 10 qui s'étend entre la paroi annulaire 4 de la coupelle 2 de manière à couvrir entièrement une section de l'espace intérieur défini par la paroi annulaire 4.

Comme cela est mieux visible à la figure 2, le support de dosette 10 est situé à distance du fond 3 de la coupelle, de sorte qu'il définit une chambre inférieure 14 avec le fond 3 et avec une partie inférieure 4a de la paroi annulaire 4. Le support 10 est également situé à distance du pourtour supérieur 5, de sorte qu'une face supérieure 10a du support définit avec une partie supérieure 4b de la paroi annulaire 4, un espace de réception ouvert qui est destiné à recevoir la dosette 11 schématiquement représentée sur la figure 2.

La dosette 11, figure 2, est un sachet souple, légèrement bombé, formé de deux feuilles de papier filtre (15, 16) jointes entre elles au niveau d'une collerette périphérique d'étanchéité 17. Le sachet contient un produit à infuser 18 se présentant sous forme d'une mouture ou d'une poudre. Le produit à infuser 18 est de la mouture de café non compactée dans l'exemple représenté, mais il pourrait s'agir de tout autre produit permettant de préparer une infusion, comme par exemple du thé, des plantes aromatiques, une poudre de chocolat ou de lait, ou encore un mélange de ces produits pour préparer un chocolat chaud ou un cappuccino. Par ailleurs, il est tout à fait envisageable d'utiliser une dosette dont l'enveloppe extérieure serait constituée différemment, par exemple sous forme d'éléments rigides en plastique associés à des éléments filtrants sous forme de tissu ou de grille perforée.

Le fond 3 de la coupelle 2 présente une légère inclinaison dirigée vers un orifice de sortie formé par une pipe d'écoulement 19 (figure 1). Ainsi, une infusion qui s'écoule librement dans la chambre inférieure 14 est recueillie et guidée vers la pipe de sortie 19 dans laquelle elle s'écoule.

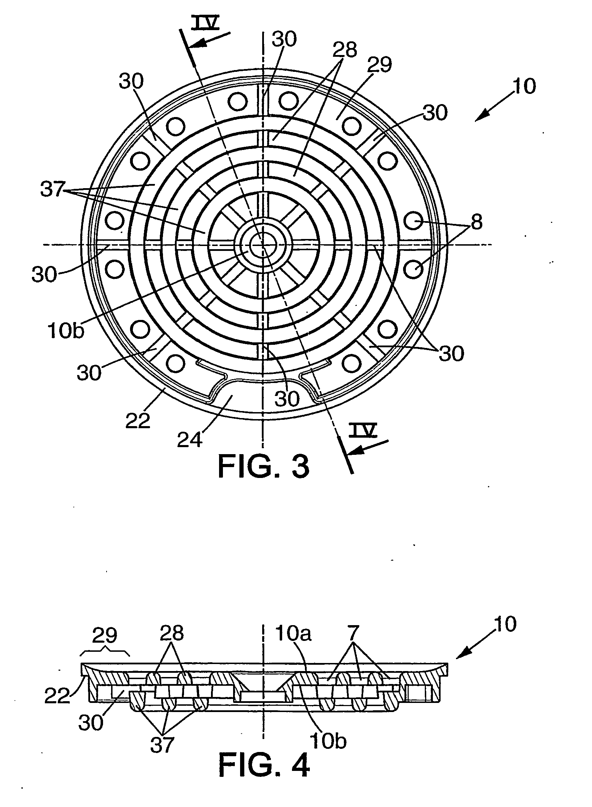

La partie inférieure 4a de la paroi annulaire 4 de la coupelle présente une forme globalement cylindrique et comporte un rebord annulaire périphérique 21 contre lequel prend appui un rebord périphérique complémentaire 22 du support de dosette 10. Le rebord 21 présente un bossage 23 qui est situé du côté de l'organe de préhension 6, et qui coopère avec une échancrure 24, visible à la figure 3, pratiquée à la périphérie 22 du support 10, de manière à indexer la position angulaire du support par rapport à la coupelle 2.

Comme montré à la figure 2, le support de dosette 10 présente également une face inférieure 10b dont la zone centrale est en appui sur un pied 26 s'étendant selon l'axe de symétrie Z de la paroi annulaire 4. Une vis 27 engagée dans un filetage du pied 26, présente une tête qui coopère avec un évidement tronconique de la face supérieure 10a du support 10 pour assurer la fixation de celui-ci à la coupelle 2.

La partie supérieure 4b de la paroi annulaire 4 de la coupelle 2 est évasée en arc de cercle de manière à épouser la partie bombée de la dosette 11, et est prolongée par un épaulement 4c radialement extérieur contre lequel repose la collerette d'étanchéité 17 de la dosette, voir figure 2. La paroi annulaire 4 de la coupelle 2 est terminée par le pourtour supérieur 5 qui définit une ouverture du porte-dosette destinée à être montée sur une sortie d'eau chaude sous pression d'une machine à café, se présentant par exemple sous forme d'une douchette.

Dans le mode de réalisation représenté, le porte-filtre 1 est placé, de manière connue, dans une chambre d'infusion délimitée par deux parties du boîtier de la machine à café, l'une des deux parties du boîtier étant montée mobile. Lors de la préparation d'une infusion, les deux parties du boîtier sont verrouillées l'une avec l'autre, de manière à ce que la partie mobile du boîtier exerce une pression sur la collerette 17 de la dosette 11 au moyen d'un joint d'étanchéité. Etant donné que le porte-filtre 1 représenté est destiné à être maintenu serré entre deux parties du boîtier, il ne comporte pas d'organe de serrage ou de verrouillage, et l'organe de préhension 6 se présente simplement sous la forme d'une languette. Toutefois, le porte-filtre pourrait se présenter sous forme d'une coupelle présentant des ergots radialement extérieurs et munie d'un manche pour être monté directement par une liaison de type baïonnette sous la sortie d'eau chaude d'une machine à café.

Comme visible à la figure 2, le support de dosette 10 présente la forme d'un disque sensiblement plat qui s'étend perpendiculairement à l'axe central Z de la coupelle 2. Le bord périphérique de la face supérieure 10a du support 10 est légèrement relevé pour venir dans la continuité de la partie évasée 4b de la coupelle et épouser le profil de la dosette 11. Toutefois, le support 10 pourrait présenter une forme sensiblement moins plane, par exemple une forme de cuvette s'étendant sur le bord arrondi de la dosette 11. Mais, même dans ce cas, le support 10 présenterait un plan moyen qui serait de préférence sensiblement parallèle au plan contenant le pourtour supérieur 5 de la coupelle 2.

Tout comme la plupart des supports de mouture pour machines à café de type espresso, le support de dosette 10 présente un certain nombre de perforations (7, 8), c'est-à-dire des orifices traversant directement le support de sa face supérieure 10a à sa face inférieure 10b. Conformément à l'invention, une partie de ces perforations est réalisée sous la forme de fentes 7. Dans un mode de réalisation préféré, les fentes 7 sont annulaires et se présentent sous la forme de trois cercles concentriques, sans liaison entre eux, qui s'étendent le long de la face supérieure 10a et de la face inférieure 10b du support 10, c'est-à-dire dans le plan moyen du support 10. Les fentes 7 s'étendent sur une longueur nettement supérieure à leur largeur, de sorte qu'il s'agit de fentes allongées, le rapport d'allongement des fentes étant de préférence supérieur à 10. En effet, un allongement important des fentes augmente la surface des perforations ainsi réalisées, et par conséquent accroît la section de passage de l'infusion à travers le support 10, par rapport à des perforations qui seraient réalisées sous la forme de trous cylindriques de diamètre égal à la largeur de la fente et disposés les uns à côté des autres sur une longueur correspondant à la longueur de la fente. En augmentant ainsi la surface des perforations constituées par les fentes 7, on limite la perte de charge de l'infusion lorsque celle-ci traverse le support de dosette 10 pour venir s'écouler dans la chambre inférieure 14, ce qui est particulièrement intéressant lorsque la machine à café délivre de l'eau chaude sous une pression relativement basse, de l'ordre de deux bars.

Dans ce même but de limiter les pertes de charges, chaque fente doit présenter une largeur minimum pour éviter tout phénomène de retenue par capillarité ou de striction de l'écoulement entraînant la formation d'un jet à partir de la face inférieure 10b du support 10. On considère que l'on obtient un écoulement libre de l'infusion à travers une fente 7 vers l'orifice de sortie 19, lorsque la fente présente une largeur d'au moins 0,5 mm dans le cas d'une dosette souple de café standard infusée sous une pression d'environ deux bars et avec des perforations (7, 8) présentant une surface cumulée qui correspond à au moins 20% de la surface totale du support 10. Cette largeur minimale des fentes 7 peut toutefois varier sensiblement en fonction de la nature, de la pression et du débit de l'infusion, ou encore en fonction de l'épaisseur du support de dosette 10.

Par ailleurs, on a constaté qu'une perforation sous forme de fente 7 soutenait efficacement le papier filtre 16 de la dosette 11, c'est-à-dire que celui-ci n'est pas déformé de manière excessive, voire déchiré, après la préparation d'une infusion, malgré sa surface non soutenue importante. Tandis qu'avec une perforation de même surface réalisée sous la forme d'un trou cylindrique, il existe un risque de détérioration de la dosette.

Il apparaît qu'une largeur de fente d'environ 2,5 mm, comme dans le mode de réalisation représenté, mais qui pourrait varier entre 1 et 3 mm, offre un bon compromis entre l'exigence d'une section de passage importante et un soutien fiable de la dosette 11.

La disposition des fentes annulaires 7 sous forme de cercles concentriques, permet à celles-ci d'occuper une grande surface du support 10 et de présenter un allongement important. Mais on notera que chaque fente pourrait également présenter une forme annulaire polygonale, ou encore être rectiligne, courbe, voire sous forme d'une spirale. Mais on privilégiera des fentes 7 disjointes qui sont placées de manière adjacente, c'est-à-dire qui s'étendent parallèlement l'une à l'autre, de sorte que les parties pleines 28 séparant deux fentes adjacentes présentent une largeur inférieure à la largeur des fentes adjacentes 7, de manière à minimiser la surface de ces parties pleines 28.

Comme on peut le voir à la figure 3, la zone périphérique annulaire 29 du support 10 est dépourvue de fente, mais comporte les perforations 8 réalisées sous la forme de trous cylindriques traversants qui augmentent donc encore la surface totale des perforations, de sorte que celle-ci représente environ 30% de la surface du disque correspondant à la surface supérieure 10a du support de dosette. Il convient de noter que cette zone périphérique 29 du support est généralement dépourvue de perforation dans les supports prévus pour des dosettes souples car la collerette périphérique de celles-ci est susceptible de se déformer et de créer un passage direct de l'eau chaude depuis la sortie de la machine à café à travers le support de dosette. On a constaté qu'en adoptant des trous cylindriques 8 d'un diamètre d'environ 2 mm et séparés les uns des autres d'une distance supérieure à leur diamètre, ce risque était limité.

Afin de supporter les parties annulaires pleines 28 séparant les fentes 7 et de conférer une résistance mécanique au support de dosette 10 permettant de résister à la pression créée par la sortie d'eau chaude, des bras de renfort 30 sont disposés contre la face inférieure 10b du support de dosette et, de préférence, s'étendent radialement par rapport au centre de celui-ci.

On notera que sous les bras de renfort 30 sont prévus des éléments de masquage 37 qui présentent chacun une forme sensiblement identique à la fente 7 correspondante. Les éléments 37 sont disposés en regard des fentes 7 de manière à masquer visuellement le fond 3 de la coupelle qui peut comporter des traces de café, et pour limiter la possibilité d'introduction d'objets étrangers dans la chambre inférieure 14 par les fentes 7. Toutefois, il est important que ces éléments de masquage 37 soient agencés à une distance significative de la face inférieure 10b du support de dosette et présentent une largeur réduite, afin de ne pas réduire par effet d'obstacle la section de passage efficace des perforations (7, 8) du support 10. Dans le présent mode de réalisation, la distance séparant la face supérieure des éléments de masquage 37 de la face inférieure 10b du support est de 2 mm, c'est-à-dire de l'ordre de grandeur de la largeur des fentes 7, et la largeur des éléments de masquage 37, mesurée radialement, est légèrement inférieure à la largeur des fentes 7, de sorte que ces éléments de masquage 37 n'entravent en aucune manière l'écoulement libre de l'infusion vers la sortie du porte-filtre.

Le support de dosette 10, ainsi que les bras de renfort 30 et les éléments de masquage 37, sont formés en une seule pièce de résine synthétique moulée, ce qui permet de réaliser en grande série des pièces complexes de forme précise tout en limitant les coûts. Il s'avère que le polyamide est une matière particulièrement adaptée pour résister à la fois aux contraintes mécaniques et aux températures que doit supporter le support de dosette 10.

Le porte-filtre 1 décrit ci-dessus limite les pertes de charges de l'infusion lorsqu'elle traverse celui-ci, et permet donc d'obtenir un débit et une pression satisfaisants en aval du support de dosette 10. De ce fait, il est particulièrement adapté à être placé dans une chambre d'infusion d'une machine à café comportant un générateur d'eau chaude sous faible pression.

## Revendications

1. Porte-filtre pour machine à café, destiné à recevoir une dosette (11) de produit à infuser et comprenant une coupelle (2) présentant un fond (3) muni d'un orifice de sortie (19) et une paroi annuaire (4) s'étendant depuis le fond (3) jusqu'à un pourtour supérieur (5) définissant une ouverture destinée à être montée sur une sortie d'eau chaude sous pression d'une machine à café, et un support de dosette (10) s'étendant entre la paroi annulaire (4) de la coupelle à distance du fond (3) de celle-ci et comportant des perforations (7, 8),
**caractérisé en ce qu'**au moins une perforation (7) est réalisée sous la forme d'une fente allongée s'étendant dans le plan dudit support (10) et présentant une largeur adaptée à permettre un écoulement libre de l'infusion vers ledit orifice de sortie (19).

2. Porte-filtre selon la revendication 1, dans lequel le support de dosette (10) comporte une pluralité de fentes annulaires disjointes (7) agencées de manière concentrique.

3. Porte-filtre selon la revendication 1 ou 2, dans lequel la surface totale des fentes (7) du support de dosette (10) représente au moins 20% de la surface totale dudit support, et est de préférence égale à environ 30% de la surface dudit support.

4. Porte-filtre selon l'une quelconque des revendications précédentes, dans lequel chaque fente (7) présente une largeur comprise entre 1 et 3 mm.

5. Porte-filtre selon l'une des revendications précédentes, dans lequel chaque fente (7) présente un allongement supérieur à 10.

6. Porte-filtre selon la revendication 2, dans lequel la distance séparant deux fentes adjacentes (7) est au plus égale à la largeur desdites fentes adjacentes.

7. Porte-filtre selon l'une quelconque des revendications précédentes, dans lequel le support de dosette présente une zone périphérique (29) qui est dépourvue de fente et dans laquelle sont pratiqués des trous cylindriques traversants (8) espacés.

8. Porte-filtre selon l'une quelconque des revendications précédentes, dans lequel le support de dosette (10) présente une face inférieure (10b) sur laquelle sont formés des bras de renfort (30) s'étendant radialement par rapport au centre dudit support.

9. Porte-filtre selon l'une quelconque des revendications précédentes, dans lequel le support de dosette (10) est formé en une seule pièce moulée en résine synthétique, et de préférence en polyamide.

10. Machine à café comportant un générateur d'eau chaude sous faible pression, de l'ordre de deux bars, et une chambre d'infusion, **caractérisée en ce que** la chambre d'infusion comporte un porte-filtre (1) selon l'une quelconque des revendications précédentes et géométriquement adapté à recevoir une dosette souple.

## Claims

1. Filter holder for a coffee machine, intended to receive a pod (11) of product to be infused and comprising a cup (2) having a bottom (3) provided with outlet orifice (19) and an annular wall (4) extending from the bottom (3) as far as a top circumference (5) defining an opening intended to be mounted on a pressurised hot water outlet of a coffee machine, and a pod support (10) extending between the annular wall (4) of the cup at a distance from the bottom (3) of the latter and comprising perforations (7, 8),
**characterised in that** at least one perforation (7) is produced in the form of an elongate slot extending in the plane of the said support (10) and having a width allowing a free flow of the infusion towards the said outlet orifice (19).

2. Filter holder according to claim 1, in which the pod support (10) comprises a plurality of separate annular slots (7) arranged concentrically.

3. Filter holder according to claim 1 or 2, in which the total surface area of the slots (7) of the pod support (10) represents at least 20% of the total surface area of the said support and is preferably equal to approximately 30% of the surface area of the said support.

4. Filter holder according to any one of the preceding claims, in which each slot (7) has a width of between 1 and 3 mm.

5. Filter holder according to one of the preceding claims, in which each slot (7) has an elongation greater than 10.

6. Filter holder according to claim 2, in which the distance separating two adjacent slots (7) is no more than the width of the said adjacent slots.

7. Filter holder according to any one of the preceding claims, in which the pod support has a peripheral zone (29) that has no slot and in which spaced-apart through cylindrical holes (8) are formed.

8. Filter holder according to any one of the preceding claims, in which the pod support (10) has a bottom face (10b) on which there are formed reinforcement arms (30) extending radially with respect to the centre of the said support.

9. Filter holder according to any one of the preceding claims, in which the pod support (10) is formed in a single piece moulded in synthetic resin, and preferably polyamide.

10. Coffee machine comprising a hot-water generator under low pressure, around two bar, and an infusion chamber, **characterised in that** the infusion chamber comprises a filter holder (1) according to any one of the preceding claims and geometrically adapted to receive a flexible pod.

## Patentansprüche

1. Filterhalter für eine Kaffeemaschine, der dazu bestimmt ist, eine Kapsel (11) mit einem Aufgussprodukt aufzunehmen, und eine Kuppel (2) aufweist, die einen mit einer Ausgangsöffnung (19) versehenen Boden (3) und eine ringförmige Wand (4) aufweist, welche sich von dem Boden (3) bis zu einem oberen Umfang (5) erstreckt, welcher eine Öffnung definiert, die dazu bestimmt, an einem Ausgang für heißes, unter Druck stehendes Wasser der Kaffeemaschine angebracht zu werden, sowie einen Kapselträger (10), der sich zwischen der ringförmigen Seitenwand (4) der Kuppel mit Abstand zu dem Boden (3) der Kuppel erstreckt und Perforationen (7, 8) aufweist,
**dadurch gekennzeichnet, dass** wenigstens eine Lochung (7) in der Form eines länglichen Schlitzes ausgebildet ist, welcher sich in der Ebene des Trägers (10) erstreckt und eine solche Größe aufweist, die ein freies Ausströmen des Aufgusses in Richtung der Ausgangsöffnung (19) erlaubt.

2. Filterhalter nach Anspruch 1, wobei der Kapselträger (10) mehrere getrennte ringförmige Schlitze (7) aufweist, die konzentrisch angeordnet sind.

3. Filterhalter nach Anspruch 1 oder 2, wobei die Gesamtfläche der Schlitze (7) des Kapselträgers (10) mindestens 20% der Gesamtfläche des Trägers ausmacht und vorzugsweise gleich ungefähr 30% der Fläche des Trägers ist.

4. Filterhalter nach einem der vorangehenden Ansprüche, wobei jeder Schlitz (7) eine Breite zwischen 1 und 3 mm hat.

5. Filterhalter nach einem der vorangehenden Ansprüche, wobei jeder Schlitz (7) eine Länge von mehr als 10 hat.

6. Filterhalter nach Anspruch 2, wobei der Abstand, der zwei benachbarte Schlitze (7) trennt, höchstens gleich der Breite dieser benachbarten Schlitze ist.

7. Filterhalter nach einem der vorangehenden Ansprüche, wobei der Kapselträger eine Umfangszone (29) aufweist, die keine Schlitze hat und in der voneinander beabstandete zylindrische Durchgangslöcher (8) ausgebildet sind.

8. Filterhalter nach einem der vorangehenden Ansprüche, wobei der Kapselträger (10) eine Unterseite (10b) aufweist, an der Verstärkungsarme (30) ausgebildet sind, welche sich relativ zum Zentrum des Halters in radialer Richtung erstrecken.

9. Filterhalter nach einem der vorangehenden Ansprüche, wobei der Kapselträger (10) aus einem einteiligen Gussteil aus Kunstharz, vorzugsweise aus Polyamid, hergestellt ist.

10. Kaffeemaschine mit einer Vorrichtung zum Erzeugen von heißem Wasser bei schwachen Druck, in der Größenordnung von 2 Bar, und mit einer Aufgusskammer, **dadurch gekennzeichnet, dass** die Aufgusskammer einen Filterhalter (1) nach einem der vorangehenden Ansprüche aufweist, und geometrisch dazu eingerichtet ist, eine nachgiebige Kapsel aufzunehmen.
